# EUROPEAN PATENT APPLICATION

(11) **EP 3 179 220 A1**
(43) Date of publication of application: **14.06.2017**
(21) Application number: 15199309.4
(22) Date of filing: 10.12.2015
(51) Int. Cl.: G01J 3/02, G01J 3/28, G01J 3/32, G01J 9/02, G01J 3/44, G01J 9/04

(54) **SYSTEM AND METHOD OF OPTICAL SPECTRUM ANALYSIS**

(71) Applicant: Aragon Photonics Labs, S.L.U., 50009 Zaragoza (ES); Fibercom S.L., 50009 Zaragoza (ES)
(72) Inventor: VILLAFRANCA VELASCO, Asier, 50009 ZARAGOZA (ES); GARCÍA LÁZARO, Francisco, Fermín, 50009 ZARAGOZA (ES)
(74) Representative: Carpintero Lopez, Francisco

(57) **Abstract**

A system and method of optical spectrum analysis that circumvents the trade-off between resolution and sensitivity by combining two spectral measurements: a first spectrum (102) from first spectral measurement means (240), having high resolution and low sensitivity; and a second spectrum (103) from second spectral measurement means (220), having lower resolution but higher resolution. The input of the of the first spectral measurement means (240) is amplified by an optical amplifier (230), being the effects induced by said amplifier (230) on the first spectrum (102) corrected at processing means (270) by comparison with the second spectrum (103).

## Description

### FIELD OF THE INVENTION

The present invention has its application within the optics sector, and especially, in the industrial area engaged in providing high-resolution optical spectrum analysers.

### BACKGROUND OF THE INVENTION

Optical spectrum analysis is a task of paramount importance in diverse fields such as optical sensing, fibre optic communications or laser fabrication, among many others. There are numerous optical spectrum analysis techniques in the state of the art, being resolution and sensitivity two of their most relevant performance metrics. Resolution can be defined as the capability of distinguishing different spectral components. That is, higher resolution means that the measurement can distinguish spectral components that have smaller spectral separation. On the other hand, sensitivity can be understood as the capability of measuring signals with low power spectral densities (PSD).

According to these parameters, we can distinguish two main groups of optical spectrum analysers (OSA):
- Low-resolution high-sensitivity OSA, typically based on passive optical filters such as tuneable diffraction gratings or Fabry-Pèrot filters, with no additional laser sources. For example, in the first case, the signal under test (SUT) is diffracted by the grating, angularly separating its spectral components. A photodetector sequentially measures said spectral components by progressively changing the incidence angle of the SUT. Typical maximum resolutions of this technology are in the order of 20 pm with a -90 dBm sensitivity, making it adequate for characterizing low PSD signals such as amplified spontaneous emission (ASE).
- High-resolution low-sensitivity OSA, typically relying on a local oscillator whose output interacts with the signal under test. This category typically includes, for example, coherent OSA, heterodyne OSA, and Brillouin OSA (BOSA), that is, an OSA based on stimulated Brillouin scattering (SBS). In particular, BOSA schemes such as the one disclosed in US 8,126,326 B2, hereby incorporated by reference to this description, can reach resolutions of 10 MHz but present a lower sensitivity due to and increased noise floor; therefore being unable to characterize the low PSD parts of a SUT with a high dynamic range.

Furthermore, if the input of a high-resolution low-sensitivity OSA is to be amplified in order to elevate low-PSD components of the SUT over the noise level, any optical amplifier will induce non-linearities depending on the input power of each spectral component, uneven amplification along the wavelength range of the SUT, and possibly saturation of the high-PSD components. The spectral measurement of the amplified signal therefore fails to accurately characterize the SUT.

In conclusion, both groups of OSA fail to properly characterise signals with spectral components presenting narrow wavelength separation and large dynamic ranges, as they either cannot resolve nearby components or cannot distinguish low-power components from the noise floor. There is hence the need of an optical spectrum analyser capable of circumventing the trade-off between sensitivity (or dynamic range) and resolution, in order to properly characterise arbitrary signals with demanding features, such as optical telecom signals with high spectral efficiency and high optical signal-to-noise ratio (OSNR).

### SUMMARY OF THE INVENTION

The current invention solves all the aforementioned problems by disclosing an optical spectrum analysis scheme that combines amplification of the signal under test before measurement with a high-resolution low-sensitivity OSA, and an auxiliary measurement by a low-resolution high-sensitivity OSA to numerically compensate any deformation of the spectrum induced by the amplification.

In a first aspect of the present invention, a system of optical spectrum analysis is disclosed which comprises:
- First spectral measurement means, configured to measure at least a first spectrum of a signal under test. For the sake of conciseness, the first spectral measurement means are also referred to in this description as high-resolution OSA (HROSA).
- Second spectral measurement means, configured to measure at least a second spectrum of the signal under test. For the sake of conciseness, the second spectral measurement means are also referred to in this description as low-resolution OSA (LROSA).
   Notice that this nomenclature does not intend to imply any particular resolution range nor technology for the LROSA and the HROSA, being the only condition imposed to the relation between both spectral measurement means that the LROSA presents a lower spectral resolution and a greater sensitivity than the HROSA. Also notice that device sensitivity may depend on the particular characteristics of the SUT. Therefore, the LROSA may only have better sensitivity than the HROSA for certain signals.
   Also notice that this nomenclature does not intend to imply that the HROSA is necessarily an independent device from the LROSA, as they can be implemented in a single device and even share certain optical components.
- At least an optical amplifier, connected to the input of the HROSA, and therefore amplifying the SUT before the measurement of the first spectrum.
- Preferably, gain control means configured to control a variable amplification level of the at least one optical amplifier, as a function of at least the second spectrum measured by the LROSA. More preferably, the gain control means are further configured to control the amplification level as a function of calibration data of the optical amplifier and the HROSA, in order to optimize the input signal of said HROSA for each particular SUT.
- Also preferably, synchronization means that coordinate operation of the HROSA and the LROSA.
- Processing means which combine the at least one first spectrum and the at least one second spectrum in order to produce a high-resolution high-sensitivity measurement. For this purpose, the processing means first compute an estimated spectrum that simulates the measurement that the LROSA would produce of the SUT after passing the optical amplifier. That is, the processing means combine the first spectrum and previously-stored information of the LROSA characteristics to compute the estimated spectrum. Then, the estimated spectrum is compared with the at least one second spectrum, hence characterizing any effects of the amplifier on the SUT spectrum and enabling the compensation of said effects, producing the high-resolution high-sensitivity measurement.

Regarding the implementation of the HROSA and LROSA, several preferred options are disclosed:
- The LROSA is preferably based on passive optical passive filtering, hence comprising a tuneable optical filter, such as a diffraction grating or a Fabry-Perot filter, and a photodetector. Preferably, the tuneable optical filter can either be located at the input or the output of optical distribution means that distribute the SUT to both the HROSA and the LROSA. Also preferably, the tuneable optical filter is tuneable both in wavelength and bandwidth.
- The HROSA is preferably based on active optical spectrometry, hence comprising a local oscillator that interacts with the SUT in any scheme known in the state of the art such as heterodyne spectrometry, coherent detection or, more preferably, Brillouin spectrometry.

In a second aspect of the present invention, a method of optical spectrum analysis is disclosed, comprising the following steps:
- Receiving at least a first spectrum from the HROSA, being the input of said HROSA amplified by the optical amplifier.
- Receiving at least a second spectrum from the LROSA, having said second spectrum lower resolution and higher sensitivity than the first spectrum.
- Compensating an effect of the optical amplifier on the first spectrum by computing an estimated spectrum simulating a measurement of the LROSA of the SUT after amplification at the optical amplifier, and comparing the estimated spectrum with the second spectrum measured by the LROSA.

Preferably, the estimated spectrum is calculated by applying information regarding operation information of the LROSA to the first spectrum. Said operation information may be, for example, the filtering characteristics of the LROSA, a calibrated response of said LROSA as a function of wavelength and/or optical power, or any other relevant parameter that determines the output of the LROSA as a function of its input. Depending on particular embodiments of the invention, the calculation of the estimated spectrum may be as simple as a convolution of the first spectrum with a filtering response of the LROSA, or it may comprise alternative and/or additional steps for a more precise estimation.

Also preferably, the step of compensating the effect of the optical amplifier further comprises:
- Computing a calibration matrix by comparing the estimated spectrum and the second spectrum. The calibration matrix hence relates an experimental low-resolution measurement of the SUT, and a estimated low-resolution measurement of the SUT after amplification. The calibration matrix calibrates the effect of the amplification on the SUT spectrum both as a function of wavelength and optical power.
- Applying the calibration matrix to the first spectrum, therefore obtaining a high-resolution spectrum with an improved sensitivity as a consequence of compensating the effects of amplification on said first spectrum.

Preferably, the step of compensating the effect of the optical amplifier may comprise using more than one HROSA measurement, measured at different amplification levels of the optical amplifier. The plurality of measurements may be used to refine the calibration process, or selected ranges of each measurement may be used in order to stitch together a single output. For example, measurements with low amplification may be used to measure the high-PSD components and measurements with high amplification may be used to measure the low-PSD components of the same spectrum; or different measurements may be used to characterize different wavelength ranges. Notice that this process may also include performing a plurality of measurements with the LROSA in order to correct the plurality of HROSA measurements.

In a third aspect of the present invention, a computer program is disclosed which implements the method of the invention. The computer program comprises computer program code means adapted to perform any embodiment of the method of the invention when run on a computer, a digital signal processor, a field-programmable gate array, an application-specific integrated circuit, a micro-processor, a microcontroller, or any other form of programmable hardware.

Notice that any feature or particular embodiment of the method of the invention may be integrated in particular embodiments of the processing means of the system of the invention. Likewise, any feature or particular embodiment of the system of the invention may be integrated in particular embodiments of the method of the invention, either as steps performed during the processing of the measured spectra, or as previous steps that control the HROSA and LROSA in order to generate said measurements.

The system, method and computer program of the invention therefore circumvent the resolution/sensitivity trade-off of conventional optical spectrum analysers, hence being able to provide high-resolution high-sensitivity spectral measurements for arbitrary signals with large dynamic ranges. Additional advantages and features of the invention will become apparent from the detailed description that follows and will be particularly pointed out in the appended claims.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 exemplifies the limitations of measuring a complex spectrum with a high dynamic range with both a high-resolution low-sensitivity OSA and a low-resolution and high-sensitivity OSA.
Figure 2 presents a schematic of the components of the system of the invention according to a particular embodiment thereof.
Figure 3 shows in greater detail a particular implementation of the processing means of the optical spectrum analysis system of the invention.
Figures 4 and 5 illustrate some of the signals involved in the optical spectrum analysis method of the invention according to a particular embodiment thereof.
Figure 6 schematically depicts a particular embodiment of the system of the invention wherein the high-resolution OSA is based on a local oscillator and the low-resolution OSA is based on a tuneable filter and a photodetector.
Figure 7 schematically shows yet another particular embodiment of the system of the invention wherein the tuneable filter of the low-resolution OSA is placed before an optical distributer.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. In particular, note that any particular embodiment or feature of the device of the invention may be applied to the method of the invention and vice versa. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

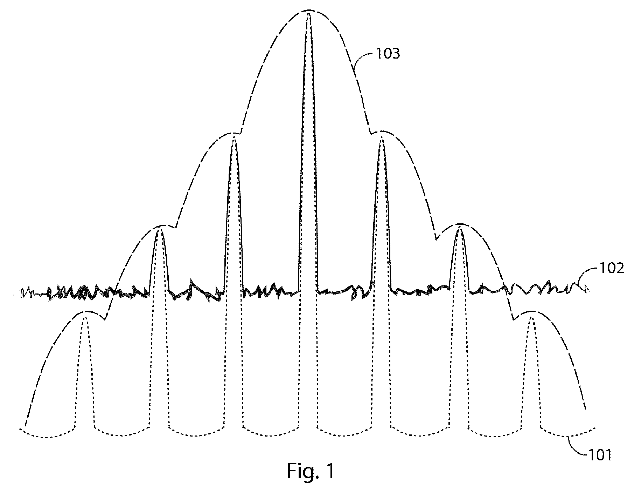

Figure 1 present an example of a signal (101) whose spectrum needs to be measured, the signal (101) having multiple components with small wavelength separations and optical powers covering a high dynamic range. Therefore, if the signal (101) is characterized by a first spectrum (102) of an OSAwith high resolution and low sensitivity, the linewidth of the high-power components is precisely measured, but the low-power components are masked my the noise floor. On the other hand, if the signal (101) is characterized by a second spectrum (103) of a low-resolution high-sensitivity OSA, the low-power components appear over the noise floor, but adjacent components aren't fully resolved.

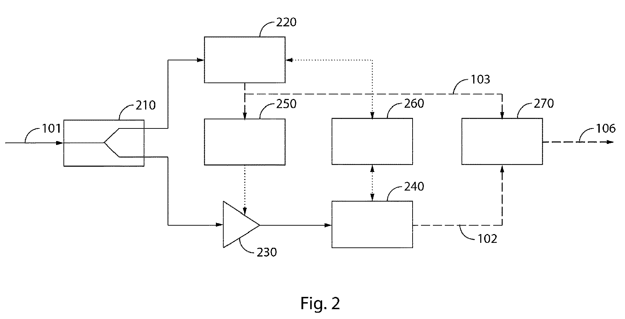

Figure 2 presents a scheme of a preferred embodiment of the solution proposed by the system of the invention, which implement the steps of a preferred embodiment of the method of the invention. Accordingly, the signal (101) under test is introduced into optical distribution means (210) that feed said signal (101) to two arms: a first arm comprising an optical amplifier (230) and a high-resolution low-sensitivity first spectral measurement means (HROSA, 240); and a second arm comprising a low-resolution high-sensitivity spectral measurement means (LROSA, 220). The HROSA (240) and LROSA (220) provide a first spectrum (102) and a second spectrum (103), respectively, which serve as input to processing means (270) in order to generate a compensated spectrum (106) which characterizes the input signal (101) with high sensitivity and high resolution. Furthermore, the system may comprise gain control means (250) and synchronization means (270).

Notice that transmission of optical signals has been depicted as solid lines in figures 2, 6 and 7, transmission of electronic signals comprising spectral measurements has been depicted as dashed lines and transmission of control signals has been depicted as dotted lines.

The optical distribution means (210) may be, for example, an optical coupler or an optical switch. The optical amplifier (230) may be, for example, an Erbium-doped fibre amplifier or a semiconductor optical amplifier with a variable gain controlled by the gain control means (250). Alternatively, the optical amplifier (230) may comprise a fixed amplifier and a variable attenuator. The HROSA (240) may be implemented, for example, by means of Brillouin spectrometry, heterodyne mixing or coherent detection. The LROSA (220) may be implemented, for example, by means of diffraction gratings, Fabry-Pèrot filtering or Fourier Transform spectrometry. The processing means (270), gain control means (250) and synchronization means (260) may be implemented jointly or separately in any kind of processor, such as a computer, a digital signal processor, a field-programmable gate array, an application-specific integrated circuit, a micro-processor, a microcontroller, or any other form of programmable hardware.

In particular, the gain control means (250) implement an algorithm which determines an amplification level of the optical amplifier (230), and any other configuration parameter, as a function of some or all of the following inputs:
- Information regarding the power, wavelength range and/or PSD of the signal (101), acquired from the second spectrum (103).
- A characterization of the gain and noise figure (NF) of the amplifier (230) as a function of input power and wavelength. This information may be measured as part of a previous calibration process and stored in a computer-readable medium accessible by the gain control means (250).
- Performance characteristics of the HROSA (240), such as sensitivity or maximum input power.

Based on the aforementioned inputs, the gain control means (250) determine the optimal configuration of the amplifier (230) that maximizes the dynamic range of the HROSA (240) for the particular signal (101) under test. Preferably, the amplification level is chosen as the minimum of the following values:
- Maximum amplification that can be applied to the signal (101) without exceeding the maximum input power of the HROSA (240).
- Maximum amplification that can be applied to the signal (101) without the noise introduced by the amplifier (230) reducing the dynamic range of the HROSA (240) measurement.

The synchronization means (260) coordinate operation of the HROSA (240) and the LROSA (220), through trigger signals, digital communications, measurement tagging, etc. For example, synchronization means (260) may coordinate parameters such as start and stop wavelength of the scans, scanning speed, etc. Furthermore, in the case of using a switch as optical distribution means (210), synchronization means (260) may control the alternate trigger of the HROSA (240) and the LROSA (220), as well as the recording of the resulting measurements in order to guarantee that both spectra represent the same state of the SUT.

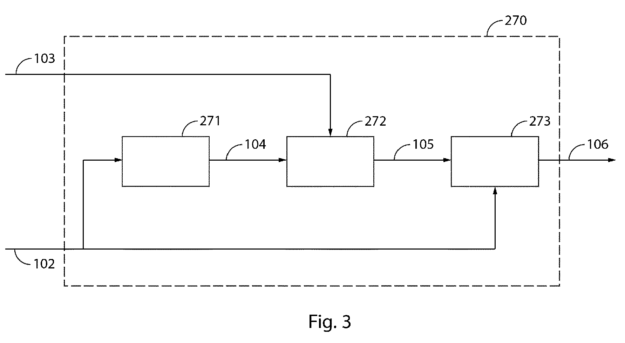

Figure 3 illustrates with grater detail the sub-components of the processing means (270) and the information shared between them. Firstly, the processing means comprise simulation means (271) that compute an estimated spectrum (104) from the first spectrum (102). Said estimated spectrum (104) simulates the measurement that the LROSA (220) would perform of the signal (101) after amplification by the amplifier (230). Said estimated spectrum (104) is then compared with the second spectrum (103) at calibration means (272), resulting in calibration data (105) that reflects the influence of the amplifier (230) on the first spectrum (102). Finally, said calibration data (105) is applied to the first spectrum (102) at compensation means (273), hence generating a compensated spectrum (106) which provides high-resolution high-sensitivity characterization of the signal (101).

More particularly, simulation means (271) use as inputs the first spectrum (102) and calibrated characteristics of the LROSA (220), such as its filtering profile. Characteristics of the LROSA (220) may be previously calibrated and stored in a computer-readable medium accessible by the simulation means (271). By combining both inputs, either by means of convolution or more complex mathematical techniques, the estimated spectrum (104) accurately represents what would have been the output of the LROSA (220) if fed the signal (101) after amplification.

Calibration means (272) then divide the second spectrum (103) by the estimated spectrum (104), obtaining calibration data (105) relating the spectrum of the signal (101) with and without amplification, and hence accounting for deformations in the first spectrum (102) induced by the optical amplifier (230). Calibration data may be expressed as a function of power and/or wavelength, being preferably represented in a calibration matrix that accounts for both parameters. Furthermore, any additional data treatment technique may be applied to the calibration data before its application, such as interpolation, smoothing, curve fitting to expected amplifier response, etc.

Finally, compensation means (273) apply the calibration data (105) to the first spectrum (102), hence compensating the effects of the amplifier (230) on the spectrum of the signal (101). This application may be as straightforward as applying the inverse or pseudo-inverse of the calibration matrix or curve to the first spectrum (102), or may comprise any number of alternative or additional data treatment known in the state of the art aimed towards data correction. For example, compensation means (273) may be configured to use any number of additional measurements or calibration data, as well as to generate the compensated spectrum (106) using fragments of multiple measurements. For example, HROSA (240) measurements with different amplification levels of the amplifier (230) may be either combined, or selected to characterize particular wavelength or power ranges of the compensated spectrum (106). This process may also include a plurality of measurements from the LROSA (220) in order to correct the plurality of HROSA (240) measurements.

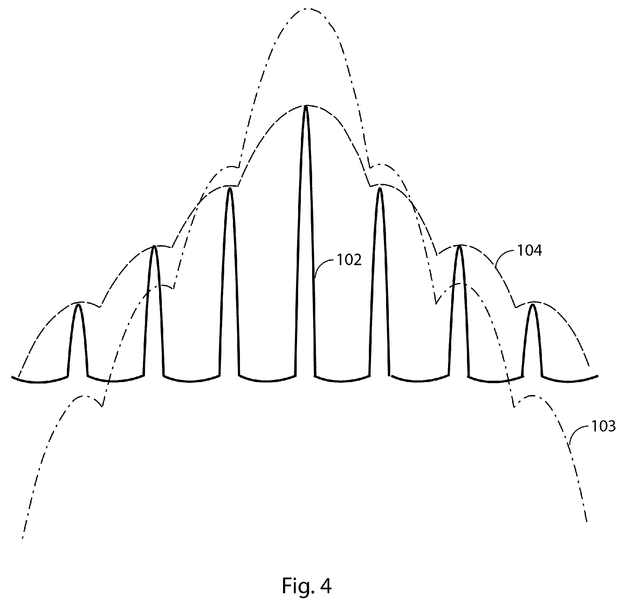

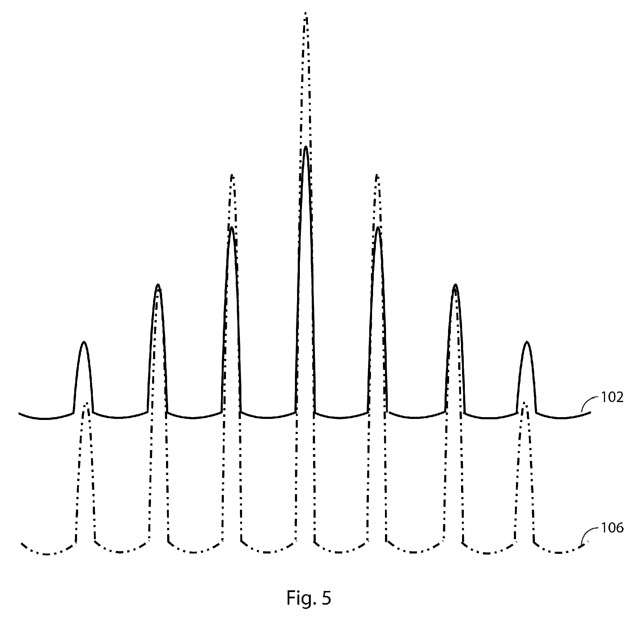

Figures 4 and 5 illustrate the described process by providing schematic examples of the spectra involved in the method and system of the invention, considering an input signal (101) with the power spectral distribution shown in figure 1. The first spectrum (102) presents a higher resolution but a lesser dynamic range. Furthermore, said first spectrum (102) is affected by the optical amplifier (230), which alters the amplification of each peak depending on their wavelength and original optical power. On the contrary, the second spectrum (103), presents a greater dynamic range and is not affected by amplification, but cannot resolve each peak due to resolution limitations. Estimated spectrum (104) presents the same dynamic range and general structure of the first spectrum (102), but the resolution and filtering characteristics of the LROSA (220). Finally, by combining the information of the first spectrum (102) and second spectrum (103), the compensated spectrum (106) benefits from both the resolution of the HROSA (240) and the sensitivity of the LROSA (220).

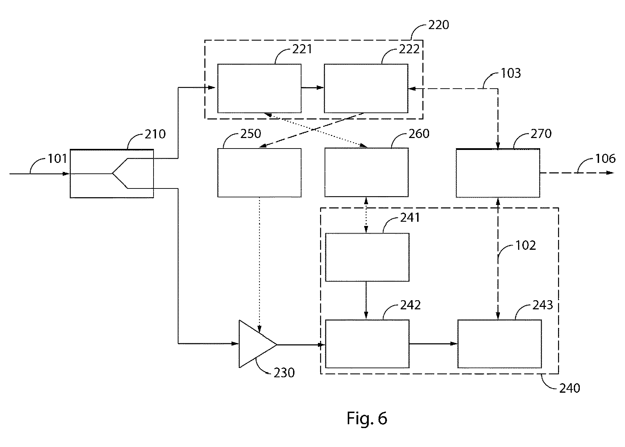

Figure 6 presents a particular implementation of the method of the invention in which the LROSA (220) comprises an optical tuneable band-pass filter (221) and a first photodetector (222). The digitalized output of the first photodetector (222) generates the second spectrum (103), whereas the characteristics of the band-pass filter (221) are calibrated and stored in a computer-readable medium to be applied in the computation of the estimated spectrum (104). On the other hand, the HROSA (240) comprises a local oscillator (241) that interacts with the signal (101) at an optical interaction medium (242), being said interaction characterized by at least a second photodetector (243). In this case, synchronization is typically performed between the band-pass filter (221) and the local oscillator (241). The local oscillator (241) may be a tuneable laser or any other light source related to any high-resolution spectroscopy technique known in the state of the art. The optical interaction medium (242) may be, for example, any of the following:
- An optical fibre in which the local oscillator (241) output and the amplified signal (101) are injected in opposite ends, and a Brillouin scattering interaction is produced.
- A coupling device that couples which the local oscillator (241) output and the amplified signal (101) to produce a heterodyne effect on the second photodetector (243).
- A hybrid coupling device that couples the local oscillator (241) output and the amplified signal (101) to produce mixings over several second photodetectors (243). In this case, each of the plurality of second photodetectors (243) produce a different part of the first spectrum (102).

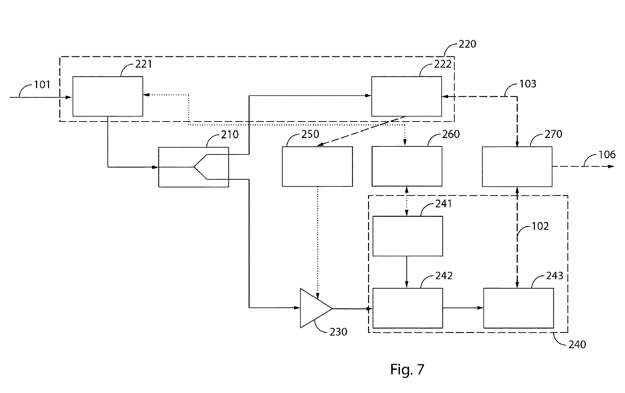

Figure 7 presents yet another preferred embodiment of the system of the invention, in which the optical tuneable band-pass filter (221) of the LROSA (220) is placed before the optical distribution means (210), therefore affecting both the LROSA (220) and the HROSA (240) arms. In this case, each measurement is not performed in a single step but as the result of several steps covering different wavelength ranges of the signal (101). Therefore, the amplification level of the amplifier (230) is optimized for each wavelength range, enabling higher amplification of the low PSD sections of the signal (101) spectrum without saturation of the amplifier nor the HROSA (240). Furthermore, processing means (270) of this preferred embodiment are configured to compensate the effects of the amplifier (230) individually on each partial measurement (that is, on the measurement performed on each wavelength range), following the same technique described for compensating said effects on a measurement of the whole spectrum. Accordingly, processing means (270) are further configured to store the result of processing each step; and to generate the compensated spectrum (106) by combining said results. In addition to being optically tuneable, the band-pass filter (221) may have a reconfigurable optical bandwidth in order to provide further control and optimization capabilities.

## Claims

1. System of optical spectrum analysis comprising:
- first spectral measurement means (240) configured to measure at least a first spectrum (102) of a signal (101),
**characterized in that** the system further comprises:
- an optical amplifier (230) connected to an input of the first spectral measurement means (240);
- second spectral measurement means (220) configured to measure at least a second spectrum (103) of the signal (101), having the at least one second spectrum (103) a greater sensitivity and a lower resolution than the at least one first spectrum (102); and
- processing means (270) configured to compensate an effect of the optical amplifier (230) on the at least one first spectrum (102) by, at least, computing an estimated spectrum (104) of the signal (101) amplified by the optical amplifier (230) and measured by the second spectral measurement means (220), and comparing the estimated spectrum (104) with the at least one second spectrum (103).

2. System according to claim 1 **characterized in that** the optical amplifier (230) is a variable amplifier and **in that** the system further comprises gain control means (250) configured to control an amplification level of the optical amplifier (230) as a function of, at least, the at least one second spectrum (103).

3. System according to claim 2 **characterized in that** the gain control means (250) are configured to control the amplification level as a function of, also, calibration data of the optical amplifier (230) and calibration data of the first spectral measurement means (240).

4. System according to any of the previous claims **characterized by** further comprising synchronization means (260) configured to synchronize operation of the first spectral measurement means (240) and the second spectral measurement means (220).

5. System according to any of the previous claims **characterized in that** the first spectral measurement means (240) further comprise a local oscillator (241).

6. System according to claim 5 **characterized in that** the first spectral measurement means (240) are based on stimulated Brillouin scattering.

7. System according to any of the previous claims **characterized in that** the second spectral measurement means (220) further comprise an optical tuneable band-pass filter (221) and a photodetector (222).

8. System according to claim 7 **characterized by** further comprising optical distribution means (210), being a first output of the distribution means (210) connected to the amplifier (230) and a second output of the distribution means (210) to the tuneable band-pass filter (221).

9. System according to claim 7 **characterized by** further comprising optical distribution means (210), being a first output of the distribution means (210) connected to the amplifier (230), a second output of the distribution means (210) to the photodetector (222) and an input of the distribution means (210) to an output of the tuneable band-pass filter (221).

10. System according to claim 9 **characterized in that** the tuneable band-pass filter (221) is tuneable both in wavelength and in bandwidth.

11. Method of optical spectrum analysis **characterized by** comprising:
- receiving at least a first spectrum (102) of a signal (101) from first spectral measurement means (240), being an input of the first spectral measurement means (240) connected to an optical amplifier (230);
- receiving at least a second spectrum (103) of the signal (101) from second spectral measurement means (220), having the at least one second spectrum (103) a greater sensitivity and a lower resolution than the at least one first spectrum (102);
- compensating an effect of the optical amplifier (230) on the at least one first spectrum (102) by, at least, computing an estimated spectrum (104) of the signal (101) amplified by the optical amplifier (230) and measured by the second spectral measurement means (220), and comparing the estimated spectrum (104) with the at least one second spectrum (103).

12. Method according to claim 11 **characterized in that** the step of computing the estimated spectrum (104) comprises applying a calibrated response of the second spectral measurement means (220) to the at least one first spectrum (102).

13. Method according to any of claims 11 and 12 **characterized in that** the step of compensating the effect of the optical amplifier (230) further comprises:
- determining a calibration matrix from the comparison between the estimated spectrum (104) and the at least one second spectrum (103), being the calibration matrix a function of wavelength and optical power; and
- applying the calibration matrix to the at least one first spectrum (102).

14. Method according to any of claims 11 to 13 **characterized in that** the step of compensating the effect of the optical amplifier (230) uses a plurality of first spectra (102) measured by the first spectral measurement means (240) at a plurality of amplification levels of the optical amplifier (230).

15. A computer program comprising computer program code means adapted to perform the steps of the method according to any of claims 11 to 14 when said program is run on a computer, a digital signal processor, a field-programmable gate array, an application-specific integrated circuit, a micro-processor, a microcontroller, or any other form of programmable hardware.
